# EUROPEAN PATENT APPLICATION

(11) **EP 1 296 488 A2**
(43) Date of publication of application: **26.03.2003**
(21) Application number: 02252570.3
(22) Date of filing: 10.04.2002
(51) Int. Cl.: H04L 12/56

(54) **Multiplexing IP data packets within a MPLS frame**

(30) Priority: 20.09.2001 US 957409
(71) Applicant: LUCENT TECHNOLOGIES INC., Murray Hill, New Jersey 07974-0636 (US)
(72) Inventor: Chuah, Mooi Choo, Marlboro, New Jersey 07746 (US); Jajoo, Sandesh Ramakant, Clifton, New Jersey 07012 (US); Medapalli, Kameswara Rao, Middletown, New Jersey 07748 (US); Park, Se-Yong, Edison, New Jersey 08820 (US)
(74) Representative: Buckley, Christopher Simon Thirsk

(57) **Abstract**

A method for reducing the amount of overhead information being added to a data packet by multiplexing IP (Internet Protocol) data packets within a MPLS (Multi Protocol Label Switching) frame, thereby reducing the amount of overhead information associated with subsequent protocol layers being added to the data packet. In one embodiment, the method utilizes a target size to limit the number of IP data packets which may be multiplexed within a MPLS frame and a timer to limit the delay in transmission of IP data packets.

## Description

### Field of the Invention

This invention relates generally to communications and, more particularly, to packet communications systems.

### Background of the Invention

As wireless communication systems continue to evolve, communications between a base station controller (BSC) and its bases stations are moving to an Internet Protocol (IP) based transport mechanism. One IP-based transport mechanism for wireless communication systems utilizes a protocol referred to herein as Multi Protocol Label Switching (MPLS), which is well-known in the art.

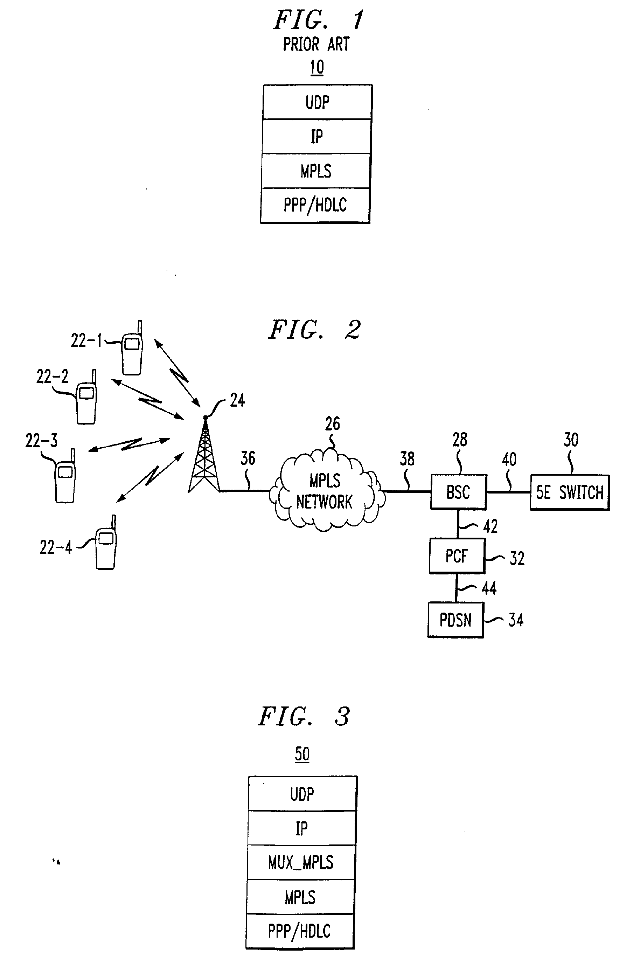

FIG. 1 depicts a protocol stack 10 comprising of at least the following protocol layers: User Datagram Protocol (UDP), IP, MPLS, Point-to-Point Protocol (PPP) and High level Data Link Control (HDLC). As a data packet gets processed going down protocol stack 10, overhead information is added to the data packet by each of the protocol layers. Specifically, UDP overhead information is added by the UDP layer to the data packet and encapsulated in an UDP frame to produce an UDP data packet. IP overhead information is added by the IP layer to the UDP data packet and encapsulated in an IP frame to produce an IP data packet. MPLS overhead information is added by the MPLS layer to the IP data packet and encapsulated in a MPLS frame to produce a MPLS data packet. PPP/HDLC overhead information is added by the PPP/HDLC layer to the MPLS data packet and encapsulated in a PPP/HDLC frame to produce a PPP/HDLC data packet. UDP, IP, MPLS and PPP/HDLC overhead information are well-known in the art.

In typical wireless communication systems, T1 lines connect the BSC to its base stations. PPP/HDLC data packets are transmitted between the BSC and base stations over the T1 lines. However, T1 lines have limited bandwidth which, in turn, limit the size of PPP/HDLC data packets that may be transmitted over the T1 lines. Thus, it is desirable to utilize bandwidth efficiently. One way to utilize bandwidth more efficiently is to reduce the amount of overhead information being added to the data packet by the protocol stack. Accordingly, there exists a need to reduce the amount of overhead information.

### Summary of the Invention

The present invention is a method for reducing the amount of overhead information being added to a data packet by multiplexing IP (Internet Protocol) data packets within a MPLS (Multi Protocol Label Switching) frame, thereby reducing the amount of overhead information associated with subsequent protocol layers being added to the data packet. In one embodiment, the present invention utilizes a target size to limit the number of IP data packets which may be multiplexed within a MPLS frame and a timer to limit the delay in transmission of IP data packets.

### Brief Description of the Drawings

The features, aspects, and advantages of the present invention will be better understood with regard to the following description, appended claims, and accompanying drawings where
FIG. 1 depicts a prior art protocol stack comprising of at least the following protocol layers: User Datagram Protocol (UDP), Internet Protocol (IP), Multi Protocol Label Switching (MPLS), Point-to-Point Protocol (PPP) and High level Data Link Control (HDLC);
FIG. 2 depicts an architecture 20 for MPLS transport used in accordance with the present invention;
FIG. 3 depicts a protocol stack for multiplexing IP data packets within a MPLS frame in accordance with one embodiment of the present invention;
FIG. 4 is a flow diagram illustrating a manner of processing streams of data transmitted from mobile-stations to a base station in accordance with several layers of the protocol stack depicted in FIG. 3; and
FIG. 5 depicts a flowchart illustrating the MUX_MPLS protocol in accordance with one embodiment of the present invention.

### Detailed Description

The present invention is a method for reducing the amount of overhead information being added to a data packet by multiplexing Internet Protocol (IP) data packets within a Multi Protocol Label Switching (MPLS) frame, thereby reducing the amount of overhead information associated with subsequent protocol layers being added to the data packet.

FIG. 2 depicts an architecture 20 incorporating an IP based transport mechanism comprising of a plurality of mobile-stations 22-1, 22-2, 22-3, 22-4, a base station 24, a MPLS network 26, a base station controller (BSC) 28, a 5E switch 30, a Packet Control Function (PCF) 32 and a Packet Data Serving Node (PDSN) 34. Mobile-stations 22-1, 22-2, 22-3, 22-4 and base station 24 are operable to communicate with each other over an air interface. Base station 24 is connected to MPLS network 26 via a T1 line 36. MPLS network comprises of a plurality of Label Edge Routers (LER) and Label Switching Routers (LSR), and is connected to BSC 28 via a T1 line (or some broadband connection, such as T3 or OC3) 38. BSC 28 is connected to 5E switch 30 and PCF 32 via broadband connections (or T1 lines) 40 and 42, respectively. PCF 32 is connected to PDSN 34 via a broadband connection (or T1 line) 44.

It should be understood that architecture 20 is provided herein for illustration purposes. Other architectures are possible. Accordingly, the present invention should not be limited to architecture 20.

FIG. 3 depicts a protocol stack 50 for multiplexing IP data packets within a MPLS frame in accordance with one embodiment of the present invention. Protocol stack 50 comprises of the following protocol layers: User Datagram Protocol (UDP), IP, multiplexing MPLS (MUX_MPLS), MPLS, Point-to-Point Protocol (PPP) and High level Data Link Control (HDLC). UDP, IP, MPLS and PPP/HDLC protocols are well-known in the art. Base station 24 and BSC 28 are operable to process data packets utilizing protocol stack 50.

For illustrative purposes, the present invention will be described herein with respect to data communication from base station 24 to BSC 28. This should not be construed to limit the present invention to only data communication from base station 24 to BSC 28. It will be readily apparent to those of ordinary skill in the art that the present invention can also be used for data communication from BSC 28 to base station 24, or between any network elements.

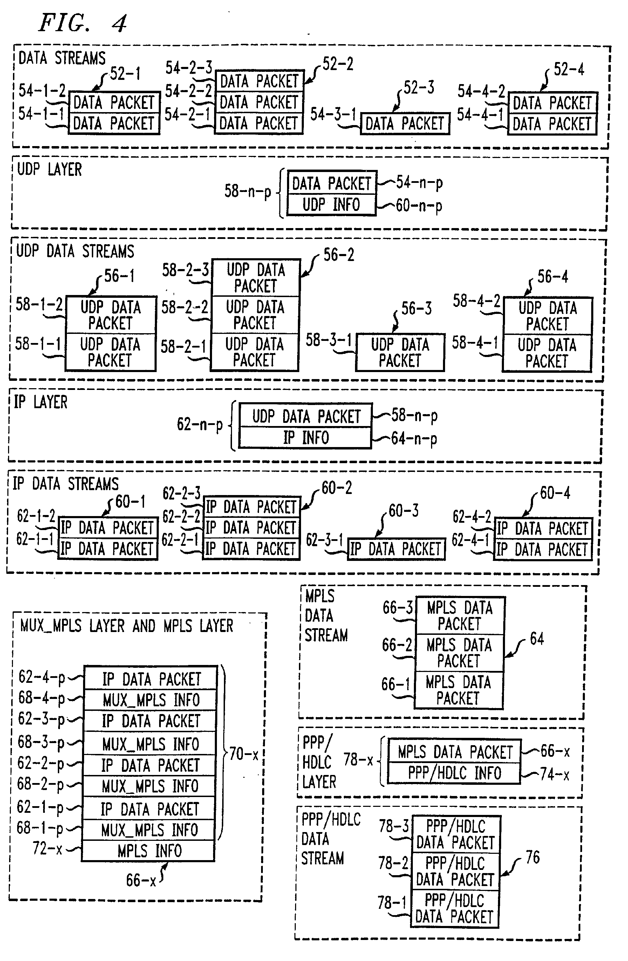

FIG. 4 is a flow diagram 50 illustrating a manner of processing streams of data 52-*n* transmitted from mobile-stations 22-*n* to base station 24 in accordance with several layers of protocol stack 50. Each data stream 52-*n* includes zero or more data packets 54-*n-p*. Each data packet 54-*n*-*p* is processed by the UDP protocol layer to produce UDP data streams 56-*n,* wherein each UDP data stream 56-*n* includes zero or more UDP data packets 58-*n*-*p.* Specifically, UDP overhead information *60-n-p* is added to each data packet 54*-n-p* and encapsulated in an UDP frame to produce UDP data packet 58*-n-p.*

Each UDP data packet 58*-n-p* is processed by the IP protocol layer to produce IP data streams 60-*n*, wherein each IP data-stream 60-*n* includes zero or more IP data packets 62*-n-p.* Specifically, IP overhead information 6*-n-p* is added to each data packet 58*-n-p* and encapsulated in an IP frame to produce IP data packet 62*-n-p.*

IP data packets 62*-n-p* are processed by the MUX_MPLS and MPLS protocol layers to produce MPLS data stream 64, wherein MPLS data stream 64 includes zero or more MPLS data packets 66-*x*. Specifically, in the MUX_MPLS protocol layer, MUX_MPLS overhead information 68*-n-p* is added to IP data packets 62*-n-p* and multiplexed within a MPLS frame to produce a MUX_MPLS data packet 70-*x*, wherein MUX_MPLS overhead information 68*-n-p* indicates a length of its associated IP data packet 62*-n-p* to allow for the separation of IP data packets 62*-n-p* in MUX_MPLS data packet 70-*x*. In one embodiment, no more than one IP data packet 62*-n-p* from a same IP data stream 60*-n* may be multiplexed within a same MPLS frame. The MUX_MPLS protocol will be described in greater detail later herein. In the MPLS protocol layer, MPLS overhead information 72-*x* is added to MUX_MPLS data packet 70-*x* and encapsulated within the same MPLS frame to produce MPLS data packet 66*-x.*

PPP/HDLC overhead information 74-*x* is added to each MPLS data packet 66*-x* and encapsulated within a PPP/HDLC frame by the PPP/HDLC protocol to produce PPP/HDLC data streams 76, wherein PPP/HDLC data stream 76 includes zero or more PPP/HDLC data packets 78-*x*.

PPP/HDLC data packets 78-*x* are further processed according to a set of T1 physical layer requirements for transmission from base station 24 over T1 line 36 to MPLS network 26 using PPP/HDLC overhead information 74-*x*. PPP/HDLC overhead information 74-*x* is terminated and replaced with new PPP/HDLC overhead information at each node for point-to-point routing of the associated MPLS data packet 66-*x* over MPLS network 26 and to BSC 28. At BSC 28, the PPP/HDLC data packet received over connection 38 is processed up protocol stack 50, including demultiplexing MUX_MPLS data packet 70-*x* to obtain IP data packets 62*-n-p* using MUX_MPLS overhead information 68*-n-p* to separate IP data packets 62*-n-p.* UDP and IP overhead information 60*-n-p* and 64*-n-p* are used to generate new IP overhead information for further routing of the associated data packets to either 5E switch 30 or PCF 32.

In an exemplary embodiment, the MUX_MPLS protocol utilizes a target size to limit the number of IP data packets which may be multiplexed within a MPLS frame and a timer to set a limit on IP data packet transmission delay. By limiting the number of IP data packets multiplexed within a MPLS frame, the amount of jitter (variability in the delay experienced by the user data) can be better controlled. Moreover, utilizing a timer puts a bound on both the delay and the jitter experienced by the user data. It is to be noted that by introducing these two key parameters into the technique, the invention caters itself to a wide range of applications. Depending upon the requirements of the delay and jitter, it would be readily apparent to one of ordinary skill in the art on how to set these parameters.

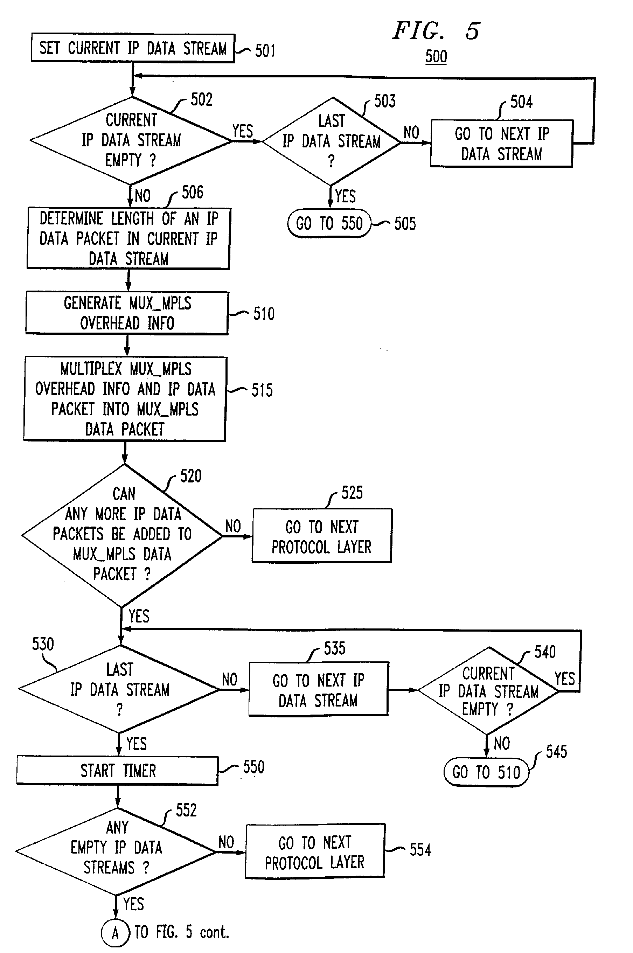

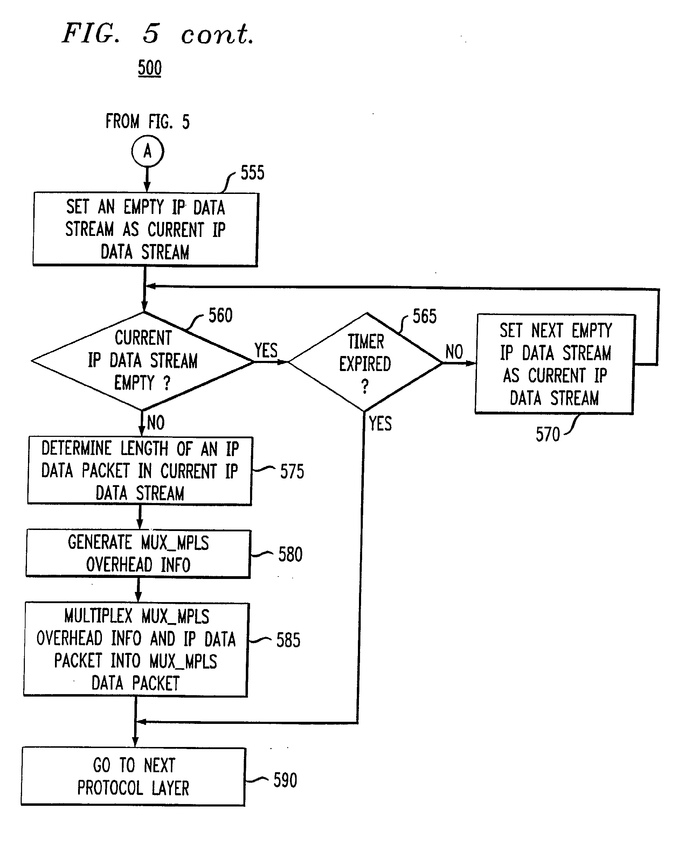

FIG. 5 depicts a flowchart 500 illustrating this embodiment of the MUX_MPLS protocol. In step 501, a IP data stream in a plurality of IP data streams is set to be a current IP data stream. In step 502, the current IP data stream is checked to determined whether it is empty, i.e., IP data stream has zero IP data packets. If the current IP data stream is an empty IP data stream then, in step 503, it is checked to determine whether the current IP data stream is the last IP data stream in the plurality of IP data streams. A current IP data stream is considered to be the last IP data stream in the plurality of data streams if it was the last IP data stream to be set as a current IP data stream. If the current IP data stream is the last IP data stream, then flowchart 500 goes to step 550. Otherwise, in step 504, a next IP data stream (which was never a current IP data stream) in the plurality of IP data streams is set as the current IP data stream and flowchart 500 returns to step 502.

If, in step 502, it is determined that the current IP data stream is not empty then, in step 506, the length or size of an IP data packet from the current IP data stream is determined. In step 510, MUX_MPLS overhead information is generated based on the determined IP data packet length.

In one embodiment, the MUX_MPLS overhead information is one byte in size, and the length of the associated IP data packet may be indicated using one of the two following formats: octet or word. In other embodiments, the MUX_MPLS overhead information may be greater than one byte in size. In the octet format, the length of the associated IP data packet is indicated in eight bit binary format if the length is less than or equal to 255 octets or bytes. Otherwise, the length of the associated IP data packet is indicated using all zeroes, i.e., 00000000, to indicate that the length is greater than 255 octets.

If the MUX_MPLS overhead information is represented using the word format, the associated IP data packet may be padded such that the resultant padded IP data packet is some integer multiple of a word, i.e., thirty-two bits. Six bits of the MUX-MPLS overhead information are used to represent the number of words in the associated IP data packet. The length of the associated IP data packet is indicated in six bit binary format if the number of words is less than or equal to 63 words. Otherwise, all zeroes, i.e., 000000, are used to indicate that the length is greater than 63 words. The other two bits of the MUX-MPLS overhead information are used to represent how many octets were used to pad the last word of the IP data packet. For example, when these two bits are set to 00 or 01, it is indicated that there are no padded octets in the last word of the IP data packet or that the last octet of the last word is padded data, respectively. In one embodiment, the two least or most significant bits of the MUX_MPLS overhead information are the two bits indicating the number of padded octets.

In either the octet or word format, when an IP data packet is greater than 255 octets or 63 words and all zeroes are used to indicate its length, no other IP data packets may be multiplexed into the same MPLS frame after that IP data packet. In other words, if a MPLS frame has an IP data packet with a length greater than 255 octets or 63 words, then such IP data packet shall be the last IP data packet in the MPLS frame. IP data packets with a length greater than 255 octets or 63 words are also referred to herein as "oversized IP data packets." It should be understood that an oversized IP data packet may be any IP data packet where its own size or length is determinative of whether the IP data packet shall be the last IP data packet in the MPLS frame, i.e., an IP data packet with a length of at least L is an oversized IP data packet.

In step 515, the MUX_MPLS overhead information and associated IP data packet are multiplexed into a MUX_MPLS data packet. If there is an existing MUX_MPLS data packet, then the MUX_MPLS overhead information and associated IP data packet are added to or multiplexed with an existing MUX_MPLS data packet. If there is no existing MUX_MPLS data packet, then the MUX_MPLS overhead information and associated IP data packet are used to form a MUX_MPLS data packet. In step 520, the MUX_MPLS data packet is checked to determine whether any more IP data packets may be added to or multiplexed with the existing or newly formed MUX_MPLS data packet. If the current size of the MUX_MPLS data packet is greater than a target size or if the MUX_MPLS overhead information associated with the last IP data packet of the MUX_MPLS data packet is all zeroes, then no more IP data packets may be added to or multiplexed with the MUX_MPLS data packet and flowchart 500 continues to the next protocol layer, i.e., MPLS protocol layer, in step 525.

The target size is related to jitter performance. Making the target size smaller can also increase the jitter performance at the cost of lower efficiency. For better efficiency the target size should be larger but this increases the amount of delay. In one embodiment, the target size is set to 300 bytes.

Otherwise, in step 520, it is determined that more IP data packets may be added to or multiplexed with the existing or newly formed MUX_MPLS data packet and flowchart 500 continues to step 530. In step 530, a check is made to determine whether the current IP data stream is the last IP data stream in the plurality of data streams. If the current IP data stream is not the last IP data stream, then flowchart 500 continues to step 535 where a next IP data stream (which was never a current IP data stream) in the plurality of IP data streams is set as the current IP data stream. In step 540, the current IP data stream is checked to determined whether it is empty. If the current IP data stream is an empty IP data stream, then flowchart 500 returns to step 530. If the current IP data stream is not empty, then flowchart 500 returns to step 510, via step 545.

If, in step 530, the current IP data stream is the last IP data stream, then flowchart 500 continues to step 550 where a timer is started. In step 552, it is determined whether there were any empty IP data streams in the plurality of IP data streams, i.e., was step 502 or 540 answered yes. If there were none then, in step 554, flowchart 500 goes to the next protocol layer. Otherwise, flowchart 500 goes to step 555.

In step 555, a previously empty IP data stream is set as the current IP data stream. In step 560, the current IP data stream is checked to determined whether it is empty. If the current IP data stream is an empty IP data stream, then flowchart 500 continues to step 565 where the timer is checked to determined whether it has expired. If the timer expired then, in step 590, flowchart 500 continues to the next protocol layer. Otherwise, flowchart 500 continues to step 570.

When a timer is set to expire depends on delay sensitivity and jitter performance. When the data is sensitive to delay and/or increase jitter performance is desired, the timer should have a timer value or be set to expire within a short time interval. In one embodiment, the timer is set to expire after 2 ms.

In step 570, a next previously empty IP data stream is set as the current IP data stream before returning flowchart 500 back to step 560. Note that, in this embodiment, empty IP data streams may be set as the current IP data stream more than once. In other embodiments, empty IP data streams may not be set as the current IP data stream more than once.

If, in step 560, it is determined that the current IP data stream is not empty, then the length or size of an IP data packet from the current IP data stream is determined in step 575. In step 580, MUX_MPLS overhead information is generated based on the determined IP data packet length. In step 585, the MUX_MPLS overhead information and the associated IP data packet are added to or multiplexed with the existing MUX_MPLS data packet. In step 590, flowchart 500 continues to the next protocol layer.

In another embodiment, an intervening step between steps 585 and 590 allows for the resetting of the timer. In such embodiment, the timer is allowed to be reset a limited number of times. If the limit of resets have been met, then flowchart 500 would continue to step 590. If the limit of resets have not been met, then flowchart 500 would return to step 570. In yet another embodiment, flowchart 500 continues to step 565, instead of step 590, from step 585. In this embodiment, an intervening step of checking the MUX_MPLS data packet size against the target size may also be performed (similar to step 520).

Note that the embodiment illustrated by flowchart 500 does not permit two IP data packets from a particular IP data stream to be multiplexed within a same MUX_MPLS data packet. In other embodiments, two IP data packets from a particular IP data stream may be multiplexed within a same MUX_MPLS data packet.

Although the present invention has been described in considerable detail with reference to certain embodiments, other versions are possible. Therefore, the spirit and scope of the present invention should not be limited to the description of the embodiments contained herein.

## Claims

1. A protocol stack comprising:
an internet protocol layer for adding internet protocol overhead information to data packets to produce internet protocol data packets;
a multiplexing layer for adding multiplexer overhead information to the internet protocol data packets and multiplexing the internet protocol data packets and multiplexer overhead information to produce a multiplexed data packet, wherein the multiplexer overhead information are interposed between the internet protocol data packets and are indicative of lengths associated with the internet protocol data packets; and
a multi protocol label switching layer for adding multi protocol label switching overhead information to the multiplexed the multiplexed data packet to produce a multi protocol label switching data packet.

2. The protocol stack of claim 1 further comprising:
a point to point protocol layer and a high level data link control protocol layer for adding point to point overhead information and high level data link control overhead information to the multi protocol label switching data packet.

3. A method for multiplexing streams of internet protocol (IP) data packets comprising the steps of:
multiplexing within a frame a first IP overhead information and a first IP data packet, the first IP overhead information indicative of a length associated with the first IP data packet;
determining whether a second IP data packet can be multiplexed into the same frame with the multiplexed first IP overhead information and the first IP data packet; and
multiplexing within the frame the second IP overhead information and the second IP data packet if the second IP data packet can be multiplexed into the frame.

4. The method of claim 3, wherein the second IP overhead information and the second IP data packet can be multiplexed within the frame if the multiplexed first IP overhead information and the first IP data packet are not greater than a target size.

5. The method of claim 4, wherein the target size is based on desired jitter performance.

6. The method of claim 3, wherein the second IP overhead information and the second IP data packet can be multiplexed within the frame if the first IP data packet was not an oversized IP data packet.

7. The method of claim 3, wherein the second IP overhead information and the second IP data packet can be multiplexed within the frame if a timer has not expired.

8. The method of claim 3, wherein the second IP overhead information and the second IP data packet can be multiplexed within the frame if a timer has not expired and if the first IP data packet was not an oversized IP data packet or the multiplexed first IP overhead information and the first IP data packet are not greater than a target size.

9. The method of claim 3, wherein the first IP data packet and the second IP data packet belong to different IP data streams.

10. The method of claim 3 comprising the additional step of:
adding multi protocol label switching overhead information to IP overhead information and IP data packets multiplexed within the frame when no more IP data packets can be multiplexed within the frame.
